# EUROPEAN PATENT APPLICATION

(11) **EP 4 711 352 A1**
(43) Date of publication of application: **18.03.2026**
(21) Application number: 25201854.4
(22) Date of filing: 12.09.2025
(51) Int. Cl.: C04B 41/45, C04B 41/00, C04B 41/52, C04B 41/89, C23C 4/11, C23C 4/134, C23C 28/04, C23C 28/00, F01D 5/28

(54) **CERAMIC COATINGS WITH SINTERING AGENTS**

(30) Priority: 13.09.2024 US 202418884728
(71) Applicant: RTX Corporation, Farmington, CT 06032 (US)
(72) Inventor: ROHBECK, Nadia, Farmington, 06032 (US)
(74) Representative: Dehns

(57) **Abstract**

A coated substrate is described for use as part of a jet engine component which includes a substrate and a coating system. The substrate can be a ceramic matrix composite or a superalloy substrate. The coating system is applied to the substrate by thermal spraying such as APS. The coating system includes a layer containing as hafnium silicate (hafnon), zirconium silicate (zircon), a rare earth phosphate (REPO₄), rare earth oxides (RE₂O₃), alumina, an aluminosilicate, rare earth-stabilized zirconia, and HfO₂-SiO₂-rare earth (RE) oxide, hafnia (HfO₂) stabilized (partially or fully) by the addition of another component, zirconia (ZrO₂) coating stabilized (partially or fully) by the addition of another component, a rare earth zirconate (RE₂Zr₂O₇), a rare earth hafnate (RE₂Hf₂O₇), and combinations thereof, wherein RE is Sc, Y, La, Ce, Pr, Nd, Pm, Sm, Eu, Gd, Tb, Dy, Ho, Er, Tm, Yb, or Lu. To mitigate crack formation during amorphous-crystalline phase transformation, the layer further contains 0.1 to 10 wt.% of a metal oxide selected from Al₂O₃, SiO₂, Nb₂O₃, MgO, CaO, SrO, BaO, and combinations thereof, as a sintering agent.

## Description

### FIELD OF THE INVENTION

The subject matter disclosed herein relates to ceramic coatings used in high temperature environments, and, in particular, relates to coatings used on jet engine components.

### BACKGROUND OF THE INVENTION

Gas turbine engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Thus, turbomachinery, such as gas turbine engines, have components such as turbine blades, turbine airfoils, blade outer air seals, and combustor liners that are exposed to hostile environments due to high temperatures. Therefore, it is desirable that such components be made of heat resistant materials such as superalloys or ceramic matrix composites (CMCs). While CMC materials can withstand much higher operating temperatures than superalloys, components made from both of these materials can be provided with coatings to enhance their ability to withstand high temperatures and/or to protect the underlying substrates from the corrosive nature of the high-energy, high temperature gas flow.

For example, jet engine components having a CMC substrate can be provided with environmental barrier coatings (EBCs) applied to the surface thereof to protect the substrate from corrosive forces due to, for example, exposure to high temperature water vapor. In order to limit infiltration of corrosive gases, for example, high temperature water vapor, it is desirable for the EBC coating system to be dense, i.e., exhibit low porosity in order to minimize vapor permeability.

A further type of coating used in turbomachinery such as jet engines are thermal barrier coatings (TBC). TBCs are applied to components having CMC or superalloy substrates that are exposed to high temperatures. TBCs are ceramic coatings that exhibit very low thermal conductivity and thus protect the underlying substrate to which they are applied from excessive temperatures. For example, TBCs can be applied to the surface of turbine blades to provide thermal insulation to allow for blade surface temperatures to exceed that which would be detrimental to the underlying blade substrate.

**In** addition to protective coatings such as EBCs and TBCs, components can be provided with machinable coatings. These are coatings that can be easily machined to achieve certain desirable surface characteristics, e.g., smoothness. While EBCs and TBCs are applied to surfaces exposed to the hot gaspath, machinable coatings can be applied to non-gaspath surfaces.

Coatings such as EBCs, TBCs, and machinable coatings can be prepared by thermal spraying such as plasma spraying using powders to form deposited layers on the substrate being treated. Typical thermal spraying processes include air or atmospheric plasma spraying (APS), vacuum plasma spraying (VPS), low pressure plasma spraying (LPPS), shrouded plasma spraying, suspension plasma spraying (SPS), and hybrid forms thereof. Ceramic coatings prepared by such methods often contain amorphous phases, as opposed to crystalline phases, in the deposited state, especially silicates. Once deposited, an additional thermal exposure above the crystallization temperature is required to sinter the coating into a stable crystalline ceramic phase.

The crystallization process (amorphous-crystalline phase transformation) for ceramics, such as hafnon (hafnium silicate) and mullite, involves notable shrinkage. This shrinkage can cause microcracking within the coating as well as formation of larger vertical or horizontal cracks. Microcracks provide a quick access path for oxidative species to reach the underlying material and thus are detrimental to EBCs performance in protecting the substrate from attack by corrosive water vapor. Similarly, microcracks allow hot gases to penetrate through TBCs thereby reducing their effectiveness to protect the underlying substrates from high temperatures. Further, the presence of such cracks can lead to coating delamination thus reducing the operational lifespan of the coating and of the underlying component.

There exists a continuing need for materials, methods, and techniques for producing coatings such as EBCs, TBCs, and machinable coatings that can enhance the properties of such coatings and/or facilitate the manufacture thereof.

### SUMMARY OF THE INVENTION

In general, the present disclosure relates to coating compositions that exhibit reduced crack formation during crystallization. In particular, the present disclosure relates to the inclusion of agents that modify the chemistry of coatings applied by thermal spray and thereby ameliorate crack formation.

The present disclosure is directed, in a first aspect, to a coated substrate having:
a ceramic matrix composite substrate comprising ceramic fiber tows within a ceramic matrix, or a superalloy substrate; and
a coating system applied to the substrate wherein the coating system includes a layer containing hafnium silicate, zirconium silicate, a rare earth phosphate (REPO₄), a rare earth oxide (RF₂O₃), alumina, an aluminosilicate (such as mullite, anorthite and/or sodium aluminosilicate), hafnia, HfO₂-SiO₂-rare earth (RE) oxide, hafnia partially or fully stabilized by an alkaline or rare earth (RE) metal, zirconia partially or fully stabilized by an alkaline or rare earth (RE) metal, a rare earth zirconate (RE₂Zr₂O₇), and a rare earth hafnate (RE₂Hf₂O₇), which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu;
wherein the layer further contains 0.1 to 10 wt.% of a metal oxide selected from Al₂O₃, SiO₂, Nb₂O₃, MgO, CaO, SrO, BaO, and combinations thereof.

In yet another embodiment, the present disclosure is directed to a method of preparing a coated substrate involving:
providing ceramic matrix composite substrate having ceramic fiber tows within a ceramic matrix or a superalloy substrate; and
applying a protective layer to the substrate by thermal spraying a powder composition containing:
   (a) hafnium silicate, hafnium oxide, zirconium silicate, a rare earth phosphate (REPO₄), a rare earth oxide (RF₂O₃), alumina, an aluminosilicate, zirconia, or combinations thereof, wherein RE is Sc, Y, La, Ce, Pr, Nd, Pm, Sm, Eu, Gd, Tb, Dy, Ho, Er, Tm, Yb, or Lu, and
   (b) 0.1 to 10 wt.% of a metal oxide selected from Al₂O₃, SiO₂, Nb₂O₃, MgO, CaO, SrO, and BaO, and combinations thereof.

In yet another embodiment, the present disclosure is directed to a jet engine component having:
a ceramic matrix composite substrate comprising ceramic fiber tows within a ceramic matrix, or a superalloy substrate; and
a coating system applied to the substrate wherein the coating system comprises a layer comprising hafnium silicate, zirconium silicate, a rare earth phosphate (REPO₄), a rare earth oxide (RF₂O₃), alumina, an aluminosilicate, hafnia, HfO₂-SiO₂-rare earth (RE) oxide, hafnia partially or fully stabilized by an alkaline or rare earth (RE) metal, zirconia partially or fully stabilized by an alkaline or rare earth (RE) metal, a rare earth zirconate (RE₂Zr₂O₇), and a rare earth hafnate (RE₂Hf₂O₇), which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu;
wherein the layer further contains 0.1 to 10 wt.% of a metal oxide selected from Al₂O₃, SiO₂, Nb₂O₃, MgO, CaO, SrO, and BaO, and combinations thereof, and
wherein the component is a turbine blade, turbine airfoil, blade outer air seal, or combustor liner.

In further embodiments of the present disclosure, including further embodiments of the above exemplary embodiments, wherein the metal oxide is Al₂O₃, Nb₂O₃, MgO, and combinations thereof.

In further embodiments of the present disclosure, including further embodiments of the above exemplary embodiments, wherein the layer contains 0.1 to 9 wt.% of the metal oxide.

In further embodiments of the present disclosure, including further embodiments of the above exemplary embodiments, wherein the layer is an environmental barrier coating (EBC).

In further embodiments of the present disclosure, including further embodiments of the above exemplary embodiments, wherein the EBC comprises hafnium silicate, zirconium silicate, a rare earth phosphate (REPO₄), a rare earth oxide (RF₂O₃), alumina, an aluminosilicate, rare earth-stabilized zirconia, and HfO₂-SiO₂-rare earth (RE) oxide, which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu, and contains 0.1 to 10 wt.% of the metal oxide.

In further embodiments of the present disclosure, including further embodiments of the above exemplary embodiments, wherein the EBC comprises hafnon, mullite, hafnia, yttrium-stabilized zirconia, silica-rich hafnium silicate, zircon, a silica-rich zirconium silicate, anorthite, sodium aluminosilicate, or combinations thereof, and contains 0.1 to 10 wt.% of the metal oxide.

In further embodiments of the present disclosure, including further embodiments of the above exemplary embodiments, wherein the thickness of the EBC is 5 to 1000 µm.

In further embodiments of the present disclosure, including further embodiments of the above exemplary embodiments, wherein the coating system further comprises a bond coat.

In further embodiments of the present disclosure, including further embodiments of the above exemplary embodiments, wherein the thickness of the bond coat layer is 1 to 1,000 µm.

In further embodiments of the present disclosure, including further embodiments of the above exemplary embodiments, wherein the layer is a thermal barrier coating (TBC).

In further embodiments of the present disclosure, including further embodiments of the above exemplary embodiments, wherein the TBC comprises hafnia, partially or fully stabilized by an alkaline metal or rare earth (RE) metal, zirconia partially or fully stabilized by an alkaline metal or rare earth (RE) metal, a rare earth zirconate (RE₂Zr₂O₇) or a rare earth hafnate (RE₂Hf₂O₇), wherein RE is Sc, Y, La, Ce, Pr, Nd, Pm, Sm, Eu, Gd, Tb, Dy, Ho, Er, Tm, Yb, or Lu, or combinations thereof, and contains 0.1 to 10 wt.% of the metal oxide.

In further embodiments of the present disclosure, including further embodiments of the above exemplary embodiments, wherein the thickness of the TBC is 25 to 2,000 µm.

In further embodiments of the present disclosure, including further embodiments of the above exemplary embodiments, wherein the substrate is a ceramic matrix composite material or a superalloy.

In further embodiments of the present disclosure, including further embodiments of the above exemplary embodiments, wherein the coating system is applied to the substrate by air plasma spraying (APS), vacuum plasma spraying (VPS), low pressure plasma spraying (LPPS), shrouded plasma spraying, or suspension plasma spraying (SPS).

The term an alkaline metal as used herein refers to an alkaline-earth metal.

The term "silica-rich hafnium silicate" may denote a non-stoichiometric hafnium silicate material obtainable by reacting SiO₂ with HfO₂ using an excess of SiO₂, i.e., the molar ratio of SiO₂ to HfO₂ being greater than 1. Thus, in silica-rich hafnium silicate the molar ratio of silicon to hafnium may be greater than 1.

Similarly, silica-rich zirconium silicate may denote a non-stoichiometric zirconium silicate material obtainable by reacting SiO₂ with ZrO₂ using an excess of SIO₂, i.e., the molar ratio of SiO₂ to ZrO₂ being greater than 1. Thus, in silica-rich zirconium silicate the molar ratio of silicon to zirconium may be greater than 1.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a schematic illustration of a cross section of a coating system applied to a substrate wherein the coating exhibits cracks.
Fig. 3 is a schematic illustration of a cross section of a substrate coated with an EBC coating system in accordance with the disclosure.
Fig. 4 is a schematic illustration of a cross section of a substrate coated with a TBC coating system in accordance with the disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

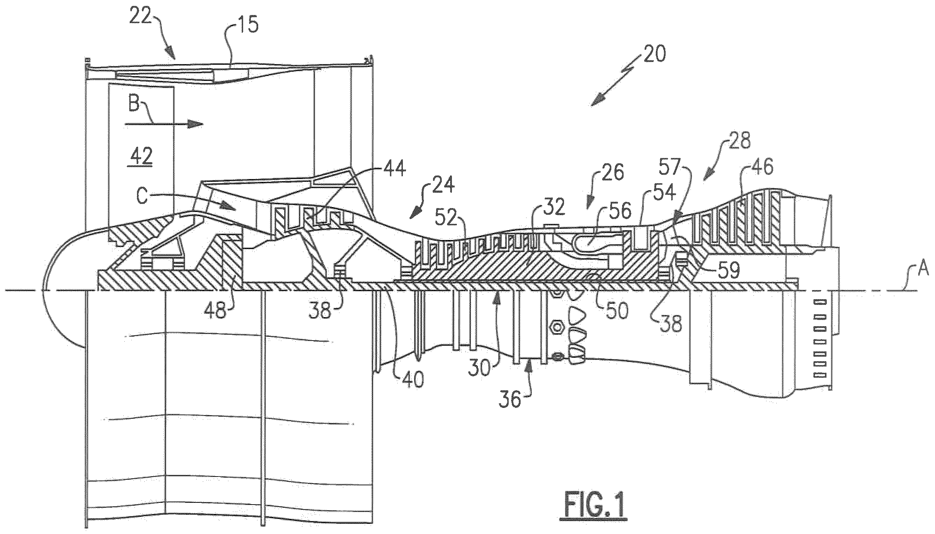

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

Within the combustion section, and all sections downstream thereof, jet engine components are exposed to high temperature gas flow, and, in some cases, a corrosive gas flow, i.e., the gaspath. Coatings such as the above-mentioned EBCs and TBCs are used to provide protection for these jet engine components. While the discussion below focuses mainly on EBCs and TBCs, the present disclosure relates to any coatings used for jet engine components.

Iron-based, nickel-based, and cobalt-based superalloys, or high-performance alloys, are alloys that exhibit significant strength and surface stability at high temperatures. Due to their ability to withstand high temperatures, these superalloys (e.g., nickel-based superalloys) can be used to manufacture jet engine components. While exhibiting high temperature resistance, the excessive operating temperatures of jet engines can deteriorate superalloys limiting the operational lifespan.

CMCs are also used in manufacturing of jet engine components. In comparison to superalloys, CMC materials are light weight (about 1/3 the weight of superalloys) and can withstand even higher operating temperatures. CMC materials can involve fiber tows which are embedded in a ceramic matrix (e.g., a SiC matrix). The fiber tows are formed as bundles of continuous or short fibers or filaments or whiskers made from, for example, SiC, C, Si₃N₄, Al₂O₃, or SiO₂. These fibers or fiber tows can, optionally, be provided with an interface coating (IFC), for example, a carbon and/or boron nitride coating, which allows the fibers or fiber tows to slide relative to the matrix. While these materials are resistant to high temperatures, they are subject to deterioration over time due to the impact of corrosive forces. For example, CMCs containing Si are subject to Si volatilization in the presence of high temperature water vapor. The resultant loss of Si leads to formation of cracks and degradation of the CMC, eventually leading to failure of the components formed thereof.

EBCs are used to provide protection for CMCs from harsh environments and corrosive forces associated therewith. For example, EBCs provide a dense and at least partially hermetic seal for CMC materials reducing exposure of the surface and interior (via penetration through pores and cracks) to high temperature water vapor, thereby reducing degradation of CMCs and extending the operational lifespan of components made therefrom. In some cases, an EBC may also act as a TBC. Desirable properties for EBCs include low porosity, good adherence to the substrate, chemical stability, phase stability, resistance to corrosive species (CMAS: CaO-MgO-Al₂O₃-SiO₂), thermal resistance, and a coefficient of thermal expansion that is similar to that of the substrate.

EBC layers can be made from a variety of materials such as hafnium silicate (hafnon), zirconium silicate (zircon), hafnia or hafnium oxide, a rare earth phosphate (REPO₄), a rare earth oxide (RF₂O₃), alumina, an aluminosilicate, rare earth-stabilized zirconia, and HfO₂-SiO₂-rare earth (RE) oxide, which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu. For example, EBC layers can be made of hafnon (HfSiO₄), zircon (ZrSiO₄), mullite (3Al₂O_{3̇}·2SiO or 2Al₂O₃·SiO₂), hafnia (HfO₂), yttrium-stabilized zirconia (YSZ), a silica-rich Hf silicate, a silica-rich Zr-silicate, anorthite, and/or sodium aluminosilicate. Layers can also be made from mixtures of materials such as a mixture of hafnon (HfSiO₄) and zircon (ZrSiO₄).

TBCs are used to provide thermal protection for both CMC and superalloy substrates. For example, in the case of CMCs, a TBC can be applied on top of an EBC to provide thermal protection for the EBC, thereby lowering the temperature on the CMC surface and consequently reducing the corrosive effect of water vapor. Desirable properties for TBCs are high melting point, low thermal conductivity, phase stability, and chemical stability.

TBCs may also often involve the combination of materials. For example, a TBC coating can be a hafnia (HfO₂) or zirconia (ZrO₂) coating stabilized (partially or fully) by the addition of another component, for example, stabilized by an alkaline or rare earth metal, such as yttrium-stabilized-zirconia (Y₂O₃-stabilized ZrO₂), magnesium-stabilized-zirconia, calcium-stabilized-zirconia, cerium-stabilized-zirconia, or combinations thereof. These coatings can be prepared in accordance with the disclosed methods by, for example, thermal spraying using a first powder which is hafnia or zirconia and a second powder which is a stabilizing agent selected from alkaline oxides and rare earth oxides. The TBC coating can also be a rare earth zirconate (RE₂Zr₂O₇) or a rare earth hafnate (RE₂Hf₂O₇), wherein RE is Sc, Y, La, Ce, Pr, Nd, Pm, Sm, Eu, Gd, Tb, Dy, Ho, Er, Tm, Yb, or Lu.

As noted above, machinable coatings can be applied to jet engine components to provide desirable surface characteristics, for example, smoothness to facilitate sealing components to other parts of the engine such as the engine casing/housing. Machinable coatings can also be made from a variety of materials such as mullite and alumina. The thickness of the machinable coating can be up to about 2,500 µm, e.g., 100 to 2,500 µm, 500 to 2,500 µm, 100 to 2,000 µm, 500 to 2,000 µm, or 500 to 1,500 µm. A bond coat (e.g., a Si-containing layer) may be provided between the substrate and the machinable coating to enhance the adherence of the machinable coating to the substrate. The thickness of the bond coat layer can be, for example, up to about 1,000 µm, such as 1 to 1,000 µm, 1 to 500 µm, 1 to 200 µm, 1 to 150 µm, 5 to 100 µm, 10 to 75 µm, or 20 to 50 µm.

As mentioned above, EBCs, TBCs, and machinable coatings can be prepared by thermal spraying (e.g., plasma spraying) using powder. Once deposited on a substrate, thermal exposure above the crystallization temperature is utilized to sinter the coating and transform any amorphous phases in the coating to crystalline phases. During the sintering and crystallization process, however, microcracks as well as larger cracks can form as a result of shrinkage which will reduce the effectiveness and operational lifespan of the coating.

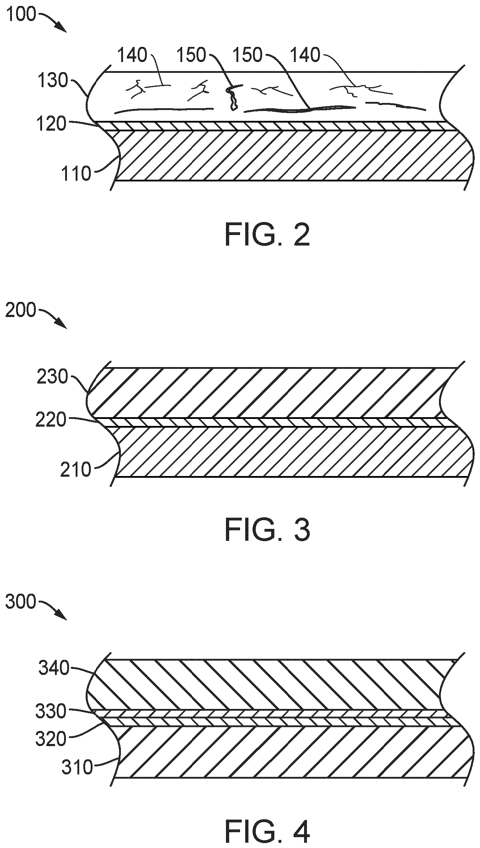

Fig. 2 schematically shows a cross section of a coated component 100, for example, a turbine blade, turbine airfoil, blade outer air seal (BOAS), or combustor liner. A multilayer coating system is applied to the component substrate 110 (e.g., CMC or superalloy substrate) and, in this embodiment, includes a bond coat layer 120 and a protective EBC or TBC coating layer 130. This protective coating layer exhibits microcracks 140 and larger cracks 150 due to shrinkage occurring during the sintering and crystallization process.

In accordance with the present disclosure, the formation of cracks during the crystallization process can be minimized by the inclusion of a low amount of metal oxide. For example, about 0.1 to 10 wt. % (such as 0.1 to 9 wt. %, 0.1 to 5 wt. %, 1 to 9 wt.%, 1 to 5 wt.%, 2 to 8 wt.%, or 3 to 7 wt.%) of a metal oxide selected from Al₂O₃, SiO₂, Nb₂O₃, MgO, CaO, SrO, BaO, and combinations thereof is added to the powder material used in the thermal spraying to deposit the coating. The metal oxide acts as a sintering aid/sintering agent to release stresses induced by shrinkage during the sintering process and thereby limits crack formation. It should be recognized that the added metal oxide sintering agent will be different from the material of the coating itself. For example, if the coating is a Al₂O₃ coating, the metal oxide will be selected from SiO₂, Nb₂O₃, MgO, CaO, SrO, BaO, and combinations thereof.

By way of example, a powder composition is used during thermal spraying to form a coating wherein the powder composition contains a main powder selected from, e.g., hafnium silicate, hafnium oxide, zirconium silicate, a rare earth phosphate (REPO₄), a rare earth oxide (RF₂O₃), alumina, an aluminosilicate, zirconia, and combinations thereof, and further contains 0.1 to 10 wt. % of an auxiliary powder which is a oxide selected from Al₂O₃, SiO₂, Nb₂O₃, MgO, CaO, SrO, BaO, and combinations thereof with the weight percentage being based on the total powder composition. The powder composition can be used with any thermal spraying process such as air or atmospheric plasma spraying (APS), vacuum plasma spraying (VPS), low pressure plasma spraying (LPPS), shrouded plasma spraying, suspension plasma spraying (SPS), and hybrid forms thereof. For example, the coating can be produced by APS wherein the powder composition is introduced into a plasma jet discharged from a plasma gun or torch. The powder particles become at least semi-molten in the plasma jet and then impinge on the surface of a substrate to forming splats which then form the coating.

Fig. 3 shows schematically a cross section of a coated component 200, for example, a BOAS, in accordance with the present disclosure. A multilayer coating system is applied to the component substrate 210 (e.g., a CMC substrate) and, in this embodiment, includes a bond coat layer 220 (to promote adhesion to the substrate) and a protective EBC layer 230. The thickness of the bond coat layer can be, for example, up to about 1,000 µm, such as 1 to 1,000 µm, 1 to 500 µm, 1 to 200 µm, 1 to 150 µm, 5 to 100 µm, 10 to 75 µm, or 20 to 50 µm. The thickness of the EBC layer can be up to about 1,000 µm, for example, 5 to 1000 µm, 25 to 1,000 µm, 25 to 500 µm, or 50 to 200 µm.

The bond coat layer can be a Si-containing material, for example, SiC materials or SiO₂-based materials comprising a silicate glass with one or more additives such as Al, Mg, Ba, Ca, B, and/or Na. The EBC layer can be a layer of, for example, a hafnium silicate, a zirconium silicate, a rare earth phosphate (REPO₄), rare earth oxides (RF₂O₃), alumina, an aluminosilicate, a rare earth-stabilized zirconia, or a HfO₂-SiO₂-rare earth (RE) oxide, which in each case may be stoichiometric or non-stoichiometric, and combinations thereof, in which the layer further contains 0.1 to 10 wt. % of a metal oxide selected from Al₂O₃, SiO₂, Nb₂O₃, MgO, CaO, SrO, BaO, and combinations thereof.

Fig. 4 shows schematically a cross section of a coated component 300, for example, a turbine blade, in accordance with the present disclosure. A multilayer coating system is applied to the component substrate 310 (in this embodiment, a superalloy substrate) and includes a metallic bond coat layer 320 (to promote adhesion to the substrate), thermally grown oxide layer 330 (which forms between the bond layer and the TBC layer), and the TBC layer 340. The thickness of the bond coat layer can be, for example, up to about 1,000 µm, such as 1 to 1,000 µm, 1 to 500 µm, 1 to 200 µm, 1 to 150 µm 5 to 100 µm, 10 to 75 µm, or 20 to 50 µm. The thickness of the TBC layer can be up to about 2,000 µm, e.g. 25 to 2,000 µm, 100 to 1000 µm, 100 to 400 µm, or 200 to 300 µm.

The bond coat layer for a superalloy substrate can be, for example, diffusion aluminide or NiCoCrAlYHfSi based coatings. The TBC layer can be, for example, a layer of hafnia (HfO₂) or zirconia (ZrO₂) coating stabilized (partially or fully) by the addition of another component, for example, stabilized by an alkaline or rare earth metal, a rare earth zirconate (RE₂Zr₂O₇), or a rare earth hafnate (RE₂Hf₂O₇), wherein RE is Sc, Y, La, Ce, Pr, Nd, Pm, Sm, Eu, Gd, Tb, Dy, Ho, Er, Tm, Yb, or Lu, and combinations thereof, wherein the layer that further contains 0.1 to 10 wt. % of a metal oxide selected from Al₂O₃, SiO₂, Nb₂O₃, MgO, CaO, SrO, BaO, and combinations thereof.

As noted above, the EBC and TBC coatings of the present disclosure can be used for components of jet engines that are exposed to the combustion gases created in the combustion section of the engine. For example, the combustion section of the engine can include an annular shroud positioned adjacent the outer casing of the engine and formed around the engine central longitudinal axis. The shroud can be made of an assembly of combustion liner segments which are directly exposed to the high temperature combustion gases. The turbine section will also have turbine blades and airfoils that will come into contact with the high temperature gases. The turbine section may further include a blade outer air seal(s) (BOAS(s)) that also are exposed to the hot gas environment. Like the combustion section shroud, the blade outer air seal can be an assembly of a plurality of segments that together form an annular shaped shroud around the engine central longitudinal axis which is positioned between an outer casing of the engine and the turbine blade(s) of the turbine section. These engine components can benefit from the protective coatings of the present disclosure.

Machinable coatings, on the other hand, are used in areas that are not exposed to the combustion gases, i.e., the hot gaspath. Thus, machinable coatings can be applied to BOAS and combustion liners on the outer radial surface, i.e., the surface between the component and the outer engine casing. Machinable coatings can also be applied to vane and blade platforms.

Preferred aspects of the invention are set out in Aspects A1-A22 below:
A1. A coated substrate comprising:
   a ceramic matrix composite substrate comprising ceramic fiber tows within a ceramic matrix, or a superalloy substrate; and
   a coating system applied to the substrate wherein the coating system comprises a layer comprising hafnium silicate, zirconium silicate, a rare earth phosphate (REPO₄), a rare earth oxide (RF₂O₃), alumina, an aluminosilicate, hafnia, HfO₂-SiO₂-rare earth (RE) oxide, hafnia partially or fully stabilized by an alkaline or rare earth (RE) metal, zirconia partially or fully stabilized by an alkaline or rare earth (RE) metal, a rare earth zirconate (RE₂Zr₂O₇), and a rare earth hafnate (RE₂Hf₂O₇), which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu;
   wherein the layer further contains 0.1 to 10 wt.% of a metal oxide selected from Al₂O₃, SiO₂, Nb₂O₃, MgO, CaO, SrO, BaO, and combinations thereof.
A2. A coated substrate according to Aspect A1, wherein the metal oxide is Al₂O₃, Nb₂O₃, MgO, and combinations thereof.
A3. A coated substrate according to Aspect A1 or Aspect A2, wherein the layer contains 0.1 to 9 wt.% of the metal oxide.
A4. A coated substrate according to any of Aspects A1-A3, wherein the layer is an environmental barrier coating (EBC).
A5. A coated substrate according to Aspect A4, wherein the EBC comprises hafnium silicate, zirconium silicate, a rare earth phosphate (REPO₄), a rare earth oxide (RF₂O₃), alumina, an aluminosilicate, rare earth-stabilized zirconia, and HfO₂-SiO₂-rare earth (RE) oxide, which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu, and contains 0.1 to 10 wt.% of the metal oxide.
A6. A coated substrate according to Aspect A4, wherein the EBC comprises hafnon, mullite, hafnia, yttrium-stabilized zirconia, silica-rich Hf silicate, zircon, a silica-rich Zr-silicate, anorthite, sodium aluminosilicate, or combinations thereof, and contains 0.1 to 10 wt.% of the metal oxide.
A7. A coated substrate according to any of Aspects A4-A6, wherein the thickness of the EBC is 5 to 1000 µm.
A8. A coated substrate according to any of Aspects A4-A7, wherein the coating system further comprises a bond coat.
A9. A coated substrate according to Aspect A8, wherein the thickness of the bond coat layer is 1 to 1,000 µm.
A10. A coated substrate according to any of Aspects A1-A3, wherein the layer is a thermal barrier coating (TBC).
A11. A coated substrate according to Aspect A10, wherein the TBC comprises hafnia, partially or fully stabilized by an alkaline metal or rare earth (RE) metal, zirconia partially or fully stabilized by an alkaline metal or rare earth (RE) metal, a rare earth zirconate (RE₂Zr₂O₇) or a rare earth hafnate (RE₂Hf₂O₇), wherein RE is Sc, Y, La, Ce, Pr, Nd, Pm, Sm, Eu, Gd, Tb, Dy, Ho, Er, Tm, Yb, or Lu, or combinations thereof, and contains 0.1 to 10 wt.% of the metal oxide.
A12. A coated substrate according to Aspect A10 or Aspect A11, wherein the thickness of the TBC is 25 to 2,000 µm.
A13. A coated substrate according to any of Aspects A10-A12, wherein the coating system further comprises a bond coat.
A14. A coated substrate according to Aspect A13, wherein the thickness of the bond coat layer is 1 to 1,000 µm.
A15. A coated substrate according to any of Aspects A1-A14, wherein the substrate is a ceramic matrix composite material or a superalloy.
A16. A method of preparing a coated substrate comprising:
   providing ceramic matrix composite substrate comprising ceramic fiber tows within a ceramic matrix or a superalloy substrate; and
   applying a protective layer to the substrate by thermal spraying a powder composition containing:
      (a) hafnium silicate, hafnium oxide, zirconium silicate, a rare earth phosphate (REPO₄), a rare earth oxide (RF₂O₃), alumina, an aluminosilicate, , zirconia, or combinations thereof, wherein RE is Sc, Y, La, Ce, Pr, Nd, Pm, Sm, Eu, Gd, Tb, Dy, Ho, Er, Tm, Yb, or Lu, and
      (b) 0.1 to 10 wt.% of a metal oxide selected from Al₂O₃, SiO₂, Nb₂O₃, MgO, CaO, SrO, and BaO, and combinations thereof.
A17. The method according to Aspect A16, wherein the coating system is applied to the substrate by air plasma spraying (APS), vacuum plasma spraying (VPS), low pressure plasma spraying (LPPS), shrouded plasma spraying, or suspension plasma spraying (SPS).
A18. The method according to Aspect A16 or A17, wherein the protective layer is an EBC.
A19. The method according to Aspect A16 or A17, wherein the protective layer is a TBC.
A20. A coated substrate according to any of Aspects A1-A15 wherein the layer comprises hafnium silicate, zirconium silicate, a rare earth phosphate (REPO₄), a rare earth oxide (RF₂O₃), an aluminosilicate, hafnia, HfO₂-SiO₂-rare earth (RE) oxide, hafnia partially or fully stabilized by an alkaline or rare earth (RE) metal, zirconia partially or fully stabilized by an alkaline or rare earth (RE) metal, a rare earth zirconate (RE₂Zr₂O₇), and a rare earth hafnate (RE₂Hf₂O₇), which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu.
A21. A coated substrate according to any of Aspects A1-A15 or A20, wherein the layer is an environmental barrier coating (EBC) and wherein the EBC comprises hafnium silicate, zirconium silicate, a rare earth phosphate (REPO₄), a rare earth oxide (RF₂O₃), an aluminosilicate, rare earth-stabilized zirconia, and HfO₂-SiO₂-rare earth (RE) oxide, which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu, and contains 0.1 to 10 wt.% of the metal oxide.
A22. A jet engine component comprising:
   a ceramic matrix composite substrate comprising ceramic fiber tows within a ceramic matrix, or a superalloy substrate; and
   a coating system as defined in any of Aspects A1-A14, A20 or A21,
   wherein said component is a turbine blade, turbine airfoil, blade outer air seal, or combustor liner.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A coated substrate comprising:
a ceramic matrix composite substrate comprising ceramic fiber tows within a ceramic matrix, or a superalloy substrate; and
a coating system applied to the substrate wherein the coating system comprises a layer comprising hafnium silicate, zirconium silicate, a rare earth phosphate (REPO₄), a rare earth oxide (RF₂O₃), alumina, an aluminosilicate, hafnia, HfO₂-SiO₂-rare earth (RE) oxide, hafnia partially or fully stabilized by an alkaline or rare earth (RE) metal, zirconia partially or fully stabilized by an alkaline or rare earth (RE) metal, a rare earth zirconate (RE₂Zr₂O₇), and a rare earth hafnate (RE₂Hf₂O₇), which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu;
wherein the layer further contains 0.1 to 10 wt.% of a metal oxide selected from Al₂O₃, SiO₂, Nb₂O₃, MgO, CaO, SrO, BaO, and combinations thereof.

2. A coated substrate according to claim 1, wherein the metal oxide is Al₂O₃, Nb₂O₃, MgO, and combinations thereof.

3. A coated substrate according to claim 1 or claim 2, wherein the layer contains 0.1 to 9 wt.% of the metal oxide.

4. A coated substrate according to any of claims 1-4, wherein the layer is an environmental barrier coating (EBC).

5. A coated substrate according to claim 4, wherein the EBC comprises hafnium silicate, zirconium silicate, a rare earth phosphate (REPO₄), a rare earth oxide (RF₂O₃), alumina, an aluminosilicate, rare earth-stabilized zirconia, and HfO₂-SiO₂-rare earth (RE) oxide, which in each case may be stoichiometric or non-stoichiometric, and combinations thereof, wherein RE is Sc, Y, La, Ce, Pr, Nd, Pm, Sm, Eu, Gd, Tb, Dy, Ho, Er, Tm, Yb, or Lu, and contains 0.1 to 10 wt.% of the metal oxide.

6. A coated substrate according to claim 4, wherein the EBC comprises hafnon, mullite, hafnia, yttrium-stabilized zirconia, silica-rich Hf silicate, zircon, a silica-rich Zr-silicate, anorthite, sodium aluminosilicate, or combinations thereof, and contains 0.1 to 10 wt.% of the metal oxide.

7. A coated substrate according to any of claims 4-6, wherein the thickness of the EBC is 5 to 1000 µm.

8. A coated substrate according to any of claims 1-3, wherein the layer is a thermal barrier coating (TBC).

9. A coated substrate according to claim 8, wherein the TBC comprises hafnia, partially or fully stabilized by an alkaline metal or rare earth (RE) metal, zirconia partially or fully stabilized by an alkaline metal or rare earth (RE) metal, a rare earth zirconate (RE₂Zr₂O₇) or a rare earth hafnate (RE₂Hf₂O₇), wherein RE is Sc, Y, La, Ce, Pr, Nd, Pm, Sm, Eu, Gd, Tb, Dy, Ho, Er, Tm, Yb, or Lu, or combinations thereof, and contains 0.1 to 10 wt.% of the metal oxide.

10. A coated substrate according to claim 8 or claim 9, wherein the thickness of the TBC is 25 to 2,000 µm.

11. A coated substrate according to any of claims 4-10, wherein the coating system further comprises a bond coat, preferably wherein the thickness of the bond coat layer is 1 to 1,000 µm.

12. A coated substrate according to any of claims 1-11, wherein the substrate is a ceramic matrix composite material or a superalloy.

13. A method of preparing a coated substrate comprising:
providing ceramic matrix composite substrate comprising ceramic fiber tows within a ceramic matrix or a superalloy substrate; and
applying a protective layer to the substrate by thermal spraying a powder composition containing:
(a) hafnium silicate, hafnium oxide, zirconium silicate, a rare earth phosphate (REPO₄), a rare earth oxide (RF₂O₃), alumina, an aluminosilicate, , zirconia, or combinations thereof, wherein RE is Sc, Y, La, Ce, Pr, Nd, Pm, Sm, Eu, Gd, Tb, Dy, Ho, Er, Tm, Yb, or Lu, and
(b) 0.1 to 10 wt.% of a metal oxide selected from Al₂O₃, SiO₂, Nb₂O₃, MgO, CaO, SrO, and BaO, and combinations thereof.

14. The method according to claim 13, wherein:
(A) the coating system is applied to the substrate by air plasma spraying (APS), vacuum plasma spraying (VPS), low pressure plasma spraying (LPPS), shrouded plasma spraying, or suspension plasma spraying (SPS), and/or:
(B) wherein the protective layer is an EBC, or
(C)wherein the protective layer is a TBC.

15. A jet engine component comprising:
a ceramic matrix composite substrate comprising ceramic fiber tows within a ceramic matrix, or a superalloy substrate; and
a coating system as defined in any of claims 1-11,
wherein said component is a turbine blade, turbine airfoil, blade outer air seal, or combustor liner.
